Europäisches Patentamt

European Patent Office

Office européen des brevets

(19)

(11) Veröffentlichungsnummer: **0 232 915 B1**

(12) **EUROPÄISCHE PATENTSCHRIFT**

(45) Veröffentlichungstag der Patentschrift: **20.06.90**

(21) Anmeldenummer: **87102036.8**

(22) Anmeldetag: **13.02.87**

(51) Int. Cl.⁵: **H 02 M 3/338**

(54) Schaltungsanordnung einer auf Resonanz basierenden Gleichspannungsquelle.

(30) Priorität: **13.02.86 FI 860664**

(43) Veröffentlichungstag der Anmeldung:
**19.08.87 Patentblatt 87/34**

(45) Bekanntmachung des Hinweises auf die
Patenterteilung:
**20.06.90 Patentblatt 90/25**

(84) Benannte Vertragsstaaten:
**AT BE CH DE ES FR GB GR IT LI LU NL SE**

(56) Entgegenhaltungen:
**GB-A-2 057 168**
**GB-A-2 170 663**
**US-A-4 301 498**

(73) Patentinhaber: **SALORA OY**
**Salorankatu 5-7**
**SF-241 00 Salo (FI)**

(72) Erfinder: **Brockman,Hans-Jürgen**
**Ullantie 6**
**SF-25130 Muurla,Pyöli (FI)**

(74) Vertreter: **UEXKÜLL & STOLBERG**
**Patentanwälte**
**Beselerstrasse 4**
**D-2000 Hamburg 52 (DE)**

## Beschreibung

Die vorliegende Erfindung betrifft eine Schaltungsanordnung für eine auf Resonanz basierende Gleichspannungsquelle, insbesondere zum Starten der Spannungsquelle, welche Schaltungsanordnung einen Netztrenntransformator mit gesteuerten primärseitigen Primärschaltern zur Beaufschlagung der Primärseite des Netztrenntransformators mit abwechselnden Spannungsimpulsen in einer bestimmten Frequenz umfasst, wobei der Netztrenntransformator sekundärseitig einen Gleichrichterkreis zur Erzeugung einer oder mehrerer Ausgangsspannungen sowie ausserdem einen Steuer-IC hat, welcher zusammen mit einem hinzugeschalteten Treibertransformator einen Rückkopplungskreis zur Steuerung der Netztrenntransformator-Primärseite auf der Basis der Ausgangsgleichspannung bildet.

Derartige auf Resonanz basierende Spannungsquellen sind allgemein gebräuchlich gemäß dem Obergriff des Anspruches 1 (GB—A—2057168). Ihr Vorteil liegt darin, dass sich durch erheblicher Erhöhung der Netzfrequenz der ausgangsseitige Ausgleichskreis beträchtlich einfacher und billiger gestalten lässt. Als Nachteil ist anzuführen, dass diese Schaltung bei anderen in der Nähe befindlichen Schaltungen Störungen bewirken kann, und dass vor allem die erforderlichen Zusatztransformatoren Preis und Platzbedarf erhöhen. Ausserdem ist die Funktionsweise der Schaltung in der Startphase, wenn die ausgangsseitigen Spannungen noch sehr niedrig sind, undefiniert.

Dieser Sachverhalt muss in Verbindung mit der vorliegenden Erfindung etwas genauer erörtert werden. Bei einer auf Resonanz basierenden Spannungsquelle hat der Leistungsübertrager einen Kopplungsfaktor beträchtlich unter eins, weshalb zwischen Primär- und Sekundärspule(n) eine sehr kleine Streukapazität erzielt wird. Dies ermöglicht Filteranordnung auf der Primärseite, aber andrerseits erhält man von der Sekundärseite über Hilfsspule keine Bezugsspannung für die Spannungsquellen-Regelung; hierzu dient vielmehr z.B. ein sekundärseitiger Regelkreis, dessen Signal über ein zusätzliches Schaltelement, im vorliegenden Falle über einen Treibertransformator, auf die Primärseite übertragen wird. Dadurch verlangsamt sich Arbeiten der Spannungsquelle in der Startphase.

Mit der vorliegenden Erfindung soll dieses Problem beseitigt und eine Leistungsquelle des in der Einleitung genannten Typs zur Verfügung gestellt werden, bei welcher speziell eine kontrollierte Startphase der Schaltung gewährleistet ist ohne dass heirzu neben dem Leistungsübertrager und dem Treibertransformator irgendwelche zusätzlichen Schaltkreise zwischen Netz- und Ausgangsseite der Spannungsquelle erforderlich wären. Eine weitere Aufgabe der Erfindung besteht darin, zu bewirken, dass speziell die für die logischen Schaltungen erforderliche Kleinspannung, z.B. 5 V, mit einer sehr geringen zeitlichen Verzögerung (z.B. <0,1 s) erzeugt wird.

Ausserdem ermöglicht der Erfindung vergleichsweise vorteilhafte Transformator-Lösungen.

Im Hinblick auf die Verwirklichung dieser Zeile ist für die Erfindung charakteristisch, dass der Steuerkreis eine Funktionsschwelle hat, so dass in der Startphase, wenn die Ausgangsgleichspannung völlig fehlt oder unter einem gewissen Schwellenwert liegt, der Rückkopplungsweg unterbrochen als, und dass die Sekundärseite des Treibertransformators als Schwingkreis ausgebildet ist, dessen Schwingungsfrequenz wenigstens angenähert der Arbeitsfrequenz des Steuerkreises entspricht und der in der Startphase selbständig und mit Sicheinschalten des Steuerkreises über den Treibertransformator zwangsgesteuert schwingt.

Es ist vorteilhaft, des Schwingkreis auf der Sekundärseite des Treibertransformators als Resonanzkreis auszubilden, welcher wiederum an einen Oszillator geschaltet ist, der in der Startphase arbeitet und sich mit Einschalten des Steuerkreises abschaltet. Der Steuerkreis kann in bekannter Weise ein Impulsbreitenmodulatorkreis sein, der, nachdem er sich eingeschaltet hat, Rechteckwelle in den Trreibertransformator speist und mit Erreichen einer bestimmten Sollausgangsspannung der Spannungsquelle die Rechteckwellen-Impulse zu verkürzen beginnt.

Wird der Resonanzkreis auf der Primärseite des Netztrenntransformators als Bandpassfilter ausgebildet, so vermeidet man schroffe Stromänderungen auf der Primärseite.

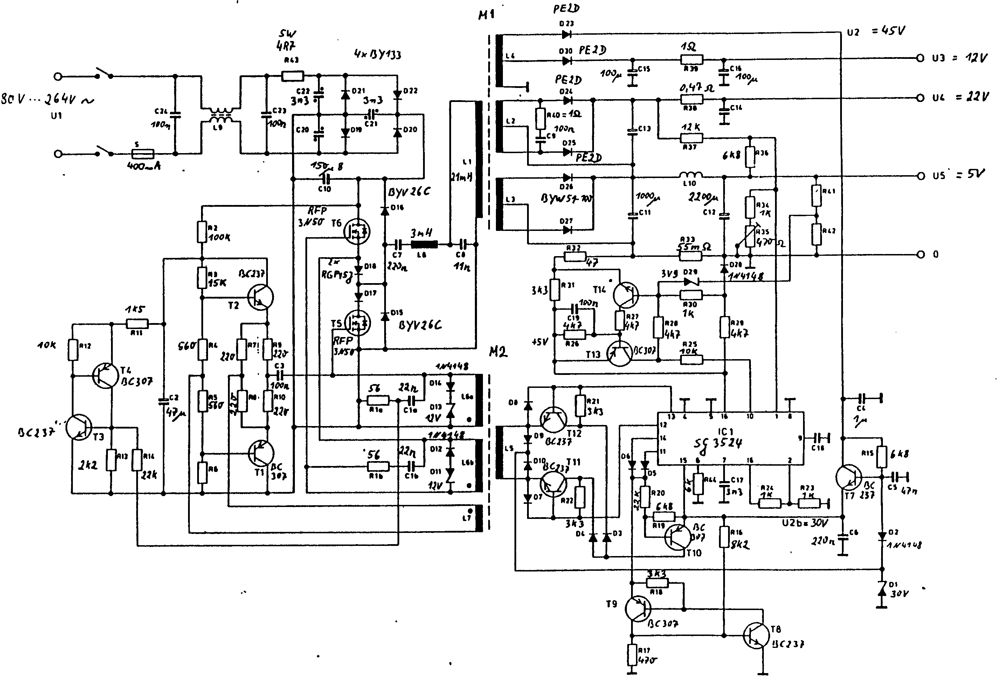

Die Erfindung und ihre sonstigen Merkmale und Vorteile werden im folgenden in Form eines Beispiels unter Bezugnahme auf die beigefügte Zeichnung, die das Schaltbild einer Ausführungsform der Erfindung zeigt, im einzelnen beschrieben.

Es werden im folgenden nur die im Hinblick auf die Erfindung wichtigen Schaltbild-Teile beschrieben, da dem Fachmann das Funktionieren der Schaltung im übrigen klar sein dürfte.

Die Eingangsseite der Spannungsquelle wird ans Netz UI angeschlossen. Diese Netzspannung wird mit dem Gleichrichter D19—D22 gleichgerichtet. Danach wird die Gleichspannung mit Hilfe sog. Primärschalter, in diesem Falle mit den Leistungstransistoren T5 und T6, in Wechselspannung höherer Frequenz umgewandelt, die über den Netztrenntransformator M1 zur Ausgangsseite geleitet und dort mit den Gleichrichtern D23—D27, D30 wiederum in die gewünschten Ausgangsgleichspannungen U2—U5 umgewandelt wird. Mit einem Rückkopplungskreis, der im wesentlichen aus der integrierten Schaltung ICI und dem Treibertransformator M2 besteht, werden, um die Ausgangsgleichspannung auf dem gewünschten Wert zu halten, die Primärschalter T5 und T6 gesteuert.

Bis hierher ist die beschriebene Schaltungsanordnung bereits bekannt. Das Wesentliche bei der Erfindung ist das Steuern der Primärschalter dann, wenn die Ausgangsspannungen noch völlig fehlen oder sehr niedrig sind, und diese Funktion soll im folgenden beschrieben werden.

Die Nennbetriebsspannung des als Steuerkreis dienenden ICI beträgt in diesem Falle 30 Volt. Der IC benötigt, um überhaupt zu funktionieren, eine bestimmte Mindestbetriebsspannung. In der dargestellten Schaltung ist dies so geregelt, dass sich der Kondensator C6 über den Transistor T7 erst dann auflädt, wenn die Ausgangsspannung U2 den Wert von 30 Volt zu übersteigen beginnt, wobei diese Schwelle durch die Zener-Diode D1 und die Diode D2 bestimmt wird. Solange die Ausgangsspannung U2 in der Startphase unter dem besagten Wert liegt, liefert der ICI keine Steuerimpulse über die Emitterfolger T11 und T12 an die Primärspule L5 des Treibertransformators M2.

Um diese Startphase unter Kontrolle zu halten ist erfindungsgemäss die Treibertransformator-Sekundärseite als Schwingkreis konzipiert, der sich zum einen aus einem Resonanzkreis bestehend aus den Sekundärspulen L6a und L6b, den Kondensatoren C1a und C1b sowie den kleinen Dämpfungswiderständen R1a und R1b und zum anderen aus dem Oszillatorskreis T1 und T2, der positive Rückkopplung von der Sekundärspule R7 des Transformators erhält, zusammensetzt. Dieser Oszillator funktioniert in der Weise, dass, hat sich der Kondensator C2 über den Widerstand R2 auf eine bestimmte Spannung aufgeladen, die Transistoren T1 und T2 genügend Basisstrom erhalten, damit anfangs ein kleiner Kollektorstrom fliessen kann, wonach dann infolge positiver Rückkopplung rasch die Schwingung mit Resonanzfrequenz einsetzt. Da die Sekundärspulen L6a und L6b eine gute magnetische Kopplung haben, braucht nur eine der Spulen über den Kondensator C3 an den Oszillator geschaltet zu werden. Das andere Ende der Rückkopplungsspule ist zwecks Erzielens einer besseren Verstärkung statt über die Emitterwiderstände R9, R10 über separate Widerstände R7 und R8 an die Emitter der Transistoren T1, T2 geschaltet. Der vorgenennte Resonanzkreis ist so bemessen, das die Resonanzfrequenz nahe bei der Frequenz der gesamten Leistungsquelle, d.h. bei der Arbeitsfrequenz des sich später einschaltenden ICI liegt.

Hat sich der Kondensator C6 in der Startphase nach mehreren Schaltzyklen auf den vorgenannten Mindestwert aufgeladen, beginnt der ICI auf Grund von Impulsbreitenmodulation zu arbeiten und liefert über einen monostabilen Schalter (in diesem Falle über die positiv mitgekoppelten Transistoren T8, T9), die Dioden D3—D6 sowie die als Emitterfolger geschalteten Transistoren T1 und T2 Steuerimpulse an die Primärspule L5. Hierbei ändert sich der zeitliche Spannungsverlauf der Sekundärwicklungen des Treibertransformators plötzlich von Sinus- un Rechteckform.

Das Tastverhältnis der Rechteckwelle beträgt so länge 50% bis die Ausgangsspannung das gewählte Referenzniveau erreicht, das im allgemeinen auf an sich bekannte Weise regulierbar gemacht wird. Danach hält dann der IC1 die Ausgangsspannung durch Verkürzen der Steuerimpulse nach dem Impulsbreitenmodulationsprinzip auf diesem Niveau. Mit Übergang der Sekundärspannung des Treibertransformators M2 auf Rechteckform folgt also auf die negative Halbphase unmittelbar die positive Halbphase, wobei am Kondensator C1a, der zusammen mit dem Widerstand R1a ein Hochpassfilter bildet, starke aufeinanderfolgende Steuerimpulse auftreten, die weiter zu den Transistoren T3 und T4 geleitet werden, welche dann wiederum über den Parallelwiderstand R11 den Startoszillator abschalten.

Der Resonanzkreis der Leistungsschaltung, m.a.W. die primärseitige Schaltung des Netztrenntransformators M1, wird vorzugsweise als Bandpassfilterkreis ausgeführt, dessen Frequenz der Arbeitsfrequenz der gesamten Schaltung entspricht. Diese Bandpassschaltung besteht aus der Reiheninduktivität L8, dem Querkondensator C8 und der Primärspulen-Induktivität L1, wobei L1 nach der auf die Primärseite reflektierten Kurzschlussinduktivität berechnet wird, m.a.W. der Kondensator C8 wird so bemessen, dass er die Bedingung

$$C8=\frac{1}{\omega^2 \times L1 \times (1-k^2)}$$

erfüllt, worin k der Kopplungsfaktor zwischen Primär- und Sekundärseite des Netztrenntransformators ist. Dieser Faktor muss deutlich kleiner als 1 sein. Die erste Induktivität L8 des T-Filters wird etwa ebenso gross wie die zweite Induktivität bemessen, genauer gesagt jedoch um den Betrag der Impedanz des Trennkondensators C7 grösser als diese. Wie bereits erwähnt, vermeidet man mit dieser Filteranordnung schroffe Stromänderungen und daraus resultierende Störungen.

Der Resonanzkondensator C9 wird so bemessen, dass die Resonanzbedingung erfüllt ist, m.a.W. ungefähr der Bedingung

$$\omega^2 \times L2 \times C9 = 1$$

entsprechend. Ausserdem wird der Netztrenntransformator so bemessen, dass der magnetische Fluss durch die Sekundärspulen L2, L3, L4 etwa gleichgross ist wie der magnetische Fluss durch die Primärspule L1. Dadurch wird eine möglichst gleichmässige Wärmeverteilung des Ferritkerns und eine gute mechanische Stabilität desselben gewährleistet. Diese Bemessung setzt voraus, das die von der Belastung abhängige Resonanzgüte $\rho$ des Sekundärresonanzkreises in einem bestimmten Verhältis zum Kopplungsfaktor k steht, genauer gesagt, dass

$$\rho = 1/k \times \sqrt{1-k^2}$$

Der mit dem Resonanzkondensator in Reihe geschaltete kleine Widerstand R40 dämpft von den Gleichrichterdioden verursachte Oberwellen.

Infolge der vorgenannten Bandpass-Bemessung verringern sich die Ströme der Schalttransistoren T5 und T6 im Falle ausgangsseitigen Kurzschlusses erheblich. Im Hinblick auf ausreichend grosse Kurzschlussinduktivität für die Primärspule L1 ist ein grosser Abstand zwischen der Primär- und den Sekundärspulen erfolderlich, was wiederum sicherheitstechnisch und im Hinblick auf die Kapazität zwischen den Spulen von Vorteil ist. Dieser Abstand kann bei Verwendung von Lackdraht zum Beispiel ca. 6 mm betragen. Entsprchend erhält man beim Treibertransformator bei grossem Spulenabstand eine niedrige Kapazität zwischen der Primärspule L5 und den Sekundärspulen L6a, L6b und L7. Hierbei können beim Treibertransformator wie auch beim Leistungsübertrager sicherheitstechnisch günstige nach der Sandwich-Technik ineinander verschachtelte Wicklungen verwendet werden.

Neben der vorgenannten Anordnung zur Verringerung von Strömen im Kurzschlussfall kann natürlich auf bekannte Weise Überstromschutz wie im angeführten Beispiel durch Spannungsteiler R41, R42 und Zener-Diode D29 verwirklicht werden.

Mit den angegebenen Komponenten-Werten beträgt die durch R44 und C17 bestimmte Arbeitsfrequenz des Steuer-IC's IC1 circa 27,6 kHz.

Natürlich besteht auch die Möglichkeit, anstelle von Impulsbreitenmodulation ein Tastverhältnis von 50% aufrechtzuerhalten und die Frequenz des Steuer-IC's zu ändern, wobei die maximale Leistungsübertragung bei Resonanzfrequenz des Leistungskreis-Bandpassfilters erreicht wird.

## Patentansprüche

1. Schaltungsanordnung, mit im Primärkreis des Netztransformators (M1) angeordnetem Resonanzkreis, die mit über einen Oszillator im Gegentakt gesteuerten primärseitigen Schaltern (T5, T6) betrieben wird, zum Einspeisen abwechselnder Spannungsimpulse in einer bestimmten Frequenz in die Primärseite (L1) des Netztrenn-transformators, wobei der Netztrenntransforma-tor sekundärseitig einen Gleichrichterkreis zur Erzeugung einer oder mehrerer Ausgangsgleichspannungen (U2—U5) und ausserdem einen Steuerkreis (IC1, T8—T12) hat, welcher zusam-men mit einem hinzugeschalteten Treibertrans-formator (M2) einen Rückkopplungskreis zur Steuerung der Primärseite des Netztrenntransformators (M1) auf der Basis der Ausgangsgleichspannung (U2—U5) bildet, dadurch gekennzeichnet, dass der Steuerkreis (IC1, T8—T12) so mit einer Funktionsschwelle (D1—2, T7, C6) versehen ist, dass in der Startphase, wenn die Ausgangsgleichspannung (U2—U5) völlig fehlt oder unter einem bestimmten Schwellenwert liegt, der Rückkopplungsweg unterbrochen ist, und dass die Sekundärseite (L6a, L6b, R1a, R1b, C1a, C1b) des Treibertransformators als Schwingkreis ausgebildet ist, dessen Schwingungsfrequenz zumindest angenähert der Arbeitsfrequenz des Steuerkreises entspricht und der in der Startphase selbständig und mit Sicheinschalten des Steuerkreises IC1, T8—T12) dann über den Treibertransformator (M2) zwangsgesteuert schwingt.

2. Schaltungsanordnung nach Anspruch 1, dadurch gekennzeichnet, dass der sekundärseitige Schwingkreis des Treibertransformators (M2) ein Resonanzkreis (L6a, l6b, L7) ist, der an einen Oszillatorkreis (T1, T2) geschaltet ist, welcher in der Startphase arbeitet und so mit dem Steuerkreis (IC1, T8—T12) gekoppelt (T3, T4) ist, dass er sich mit Sicheinschalten des Steuerkreises abschaltet.

3. Schaltungsanordnung nach Anspruch 1 oder 2, dadurch gekennzeichnet, dass der Steuerkreis (IC1, T8—T12) ein auf an sich bekannte Weise mit Impulsbreitenmodulation arbeitender Impulskreis ist, wobei sich der zeitliche Spannungsverlauf der Treibertransformator-Sekundärseite mit Sicheinschalten des Impulskreises von der Sinus- in die Rechteckform ändert und der Impulskreis, sobald die Ausgangsgleichspannung (U2—U5) den im voraus festgelegten Bezugswert erreicht, die Impulse der Rechteckwelle zu verkürzen beginnt.

4. Schaltungsanordnung nach einem der Ansprüche 1 bis 3, dadurch gekennzeichnet, dass der primärseitige Resonanzkreis des Netztrenn-transformators (M1) als Bandpassfilter verwirk-licht ist, das so bemessen ist, das die Durchlassfrequenz angenähert der Spannungsquellen-Arbeitsfrequenz bei kurzgeschlossener Sekundärseite des Netztrenntransformators entspricht.

5. Schaltungsanordnung nach Anspruch 4, dadurch gekennzeichnet, dass das Bandpassfilter ein T-Filter ist, welches eine Reiheninduktivität (L8), einen Querkondensator (C8) und die Netztrenntransformator-Primärspule (L1) umfasst, wobei die letztgenannte Spule nach der zur Pri-märseite reflektierten Kurzschlussinduktivität $L1(l-k^2)$ bemessen ist.

6. Schaltungsanordnung nach Anspruch 5, dadurch gekennzeichnet, dass der Querkondensator (C8) des T-Filters so bemessen wird, dass er angenähert die Bedingung

$$C8=\frac{1}{\omega^2\times L1\times(l-k^2)}$$

erfüllt, worin: $\omega=2\pi f$, L1=Induktivität der Primär-seite, k=Kopplungsfaktor.

7. Schaltungsanordnung nach Anspruch 5, dadurch gekennzeichnet, dass die erste Indukti-tät (L8) des T-Filters ungefähr um die Impedanz des Filter-Trennkondensators (C7) grösser als die zur Primärseite reflektierte Kurzschlussinduktivi-tät $L1(l-k^2)$ bemessen wird.

8. Schaltungsanordnung nach einem der Ansprüche 4 bis 7, dadurch gekennzeichnet, dass die Komponenten (L8, C8, L1) des Filters, der als galvanische Trennung zwischen Primärschalter (T5, T6) und Netztrenntransformator (M1) fungierende Kondensator (C7) und der sekundärseitige Resonanzkondensator (C9) des Netztrenntransformators so bemessen werden, dass bei einem Tastverhältnis von 50% der Aufnahmestrom des T-Filters zum Schaltungszeitpunkt den Nullpunkt passiert.

9. Schaltungsanordnung nach einem der Ansprüche 4 bis 7, dadurch gekennzeichnet, dass die Regelung durch Veranderung der Frequenz des Steuer-IC's (IC1) erfolt, wobei die maximale Leistungsübertragung bei Resonanzfrequenz des Bandpassfilters erreicht wird.

## Revendications

1. Dispositif de circuit, comportant un circuit de résonance, disposé dans le circuit primaire du transformateur de réseau (M1), qui est actionné à l'aide de commutateurs (T5, T6) du côté primaire, commandés de façon symétrique par l'intermédiaire d'un oscillateur, pour alimenter des impulsions de tension alternatives de fréquence déterminée dans le côté primaire (L1) du transformateur séparateur de réseau, le transformateur séparateur de réseau possédant sur le côté secondaire un circuit redresseur pour engrendrer une ou plusieurs tensions continues de sortie (U2 à U5) et en outre un circuit de commande (IC1, T8 à T12) qui constitué, en coopération avec un transformateur d'attaque (M2) auxiliaire, un circuit de rétroaction pour la commande du côté primaire du transformateur séparateur de réseau (M1) sur la base de la tension continue de sortie (U2 à U5), caractérisé en ce que le circuit de commande (IC1, T8 à T12) comporte un seuil fonctionnel (D1—2, T7, C6), de telle façon que, dans la phase initiale, lorsque la tension continue de sortie (U2 à U5) est totalement absente ou est située au-dessous d'une valeur de seuil définie, le chemin de rétroaction est interrompu, et en ce que le côté secondaire (L6a, L6b, R1a, R1b, C1a, C1b) du transformateur d'attaque est constitué comme circuit oscillant, dont la fréqence d'oscillation correspond au moins à peu près à la fréquence de travail du circuit de commande, et qui, dans la phase initiale, oscille de façon autonome et, lors de la mise en commutation du circuit de commande (IC1, T8 à T12) oscille alors en étant commandé de façon forcée par le transformateur d'attaque (M2).

2. Dispositif de circuit selon la revendication 1, caractérisé en ce que le circuit oscillant du côté secondaire du transformateur d'attaque (M2) est un circuit à résonance (L6a, L6b, L7), qui est raccordé à un circuit d'oscillateur (t1, T2), qui agit dans la phase initiale et qui est couplé avec le circuit de commande de telle façon qu'il se déclenche lors de l'entrée en ligne du circuit de commande.

3. Dispositif de circuit selon la revendication 1 ou 2, caractérisé en ce que le circuit de commande (IC1, T8 à T12) est un circuit d'impulsion agissant par une modulation de largeur d'impulsion connue en soi, le tracé de la tension en fonction du temps du côté secondaire du transformateur d'attaque passant, lors de l'entrée en ligne du circuit d'impulsion, de la forme sinusoïdale à la forme rectangulaire, et le circuit d'impulsion commençant à raccourcir les impulsions de l'onde rectangulaire dès que la tension continue de sortie (U2 à U5) atteint la valeur de référence déterminée au préalable.

4. Dispositif de circuit selon l'une des revendications 1 à 3, caractérisé en ce que le circuit de résonance du côté primaire du transformateur séparateur de réseau (M1) est réalisé comme filtre passe-band, choisi de telle façon que la fréquence de passage corresponde à peu près à la fréquence de travail des sources de tension lorsque le côté secondaire du transformateur séparateur de réseau est en court-circuit.

5. Dispositif de circuit selon la revendication 4, caractérisé en ce que le filtre passe-bande est un filtre en T, qui comprend une inductance en série (L8), un condensateur transversal (C8) et la bobine primaire (L1) du transformateur séparateur de réseau, cette dernière bobine étant choisie en fonction de l'inductance en court-circuit $L1(I-k^2)$ réfléchie vers le côté primaire.

6. Dispositif de circuit selon la revendication 5, caractérisé en ce que le condensateur transversal (C8) du filtre en T est tel qu'il répond à peu près à la condition.

$$C8=\frac{1}{\omega^2 \times L1 \times (I-k^2)}$$

dans lequel $\omega = 2\pi f$, L1=inductance du côté primaire, k=facteur de couplage.

7. Dispositif de circuit selon la revendication 5, caractérisé en ce que la première inductance (L8) du filtre en T est supérieure, d'une valeur à peu près égale à l'impédance du condensateur séparateur de filtre (C7), à l'inductance en court-circuit $L1(I-k^2)$ réfléchie vers le côté primaire.

8. Dispositif de circuit selon l'une des revendications 4 à 7, caractérisé en ce que les composants (L8, C8, L1) du filtre, le condensateur (C7) fonctionnant comme séparateur galvanique entre le commutateur primaire (T5, T6) et le transformateur séparateur de réseau (M1) et le condensateur de résonance du côté secondaire (C9) du transformateur séparateur de réseau sont choisis de telle façon que, pour un rapport de 50% entre la durée de passage du courant pendant le cycle et la durée du cycle, le courant d'entrée du filtre T passe par le point zéro à l'instant de la commutation.

9. Dispositif de circuit selon l'une des revendications 4 à 7, caractérisé en ce que le réglage est effectué par variation de la fréquence du circuit intégré de commande (IC1), le transfert maximal de puissance étant atteint pour une fréquence de résonance du filtre passe-bande.

## Claims

1. Circuit arrangement, with resonant circuit arranged in the primary circuit of the mains transformer (M1), which is operated with switches (T5, T6) on the primary side with push-pull control via an oscillator, for feeding alternating voltage pulses of a given frequency into the primary side (L1) of the mains isolating transformer, the mains isolating transformer having on the secondary side a rectifier circuit for generating one or more output DC voltages (U2—U5) and

also a control circuit (IC1, T8—T12) which, together with a driver transformer (M2) connected thereto, forms a feedback circuit for controlling the primary side of the mains isolating transformer (M1) on the basis of the output DC voltage (U2—U5), characterized in that the control circuit (IC1, T8—T12) is provided with a function threshold (D1—2, T7, C6) in such a way that the feedback path is interrupted in the start phase when the output DC voltage (U2—U5) is completely absent or lies below a given threshold value, and in that the secondary side (L6a, L6b, R1a, R1b, C1a, C1b) of the driver transformer is designed as oscillating circuit, the oscillating frequency of which corresponds at least approximately to the working frequency of the control circuit and which forcibly oscillates automatically in the start phase and then via the driver transformer (M2) when the control circuit (IC1, T8—T12) switches itself on.

2. Circuit arrangement according to Claim 1, characterized in that the oscillating circuit of the driver transformer (M2) on the scondary side is a resonant circuit (L6a, L6b, L7) which is connected to an oscillator circuit (T1, T2), which works in the start phase and is coupled (T3, T4) to the control circuit (IC1, T8—T12) in such a way that it switches itself off when the control circuit switches itself on.

3. Circuit arrangement according to Claim 1 or 2, characterized in that the control circuit (IC1, T8—T12) is a pulse circuit working with pulse-width modulation in a manner known per se, the temporal voltage characteristic of the driver transformer secondary side changing from the sinusoidal to the rectangular form when the pulse circuit switches itself on, and, as soon as the output DC voltage (U2—U5) reaches the predetermined reference value, the pulse circuit begins to shorten the pulse of the rectangular wave.

4. Circuit arrangement according to one of Claims 1 to 3, characterized in that the resonant circuit of the mains isolating transformer (M1) on the primary side is realized as band-pass filter, which is dimensioned in such a way that the pass frequency approximately corresponds to the working frequency of the voltage source when the secondary side of the mains isolating transformer is short-circuited.

5. Circuit arrangement according to Claim 4, characterized in that the band-pass filter is a T-filter comprising a series inductance (L8), as shunt capacitor (C8) and the mains isolating transformer primary coil (L1), the latter coil being dimensioned in accordance with the short-circuit inductance $L1(1-k^2)$ reflected to the primary side.

6. Circuit arrangement according to Claim 5, characterized in that the shunt capacitor (C8) of the T-filter is dimensioned so that it approximately fulfils the condition

$$C8=\frac{1}{\omega^2 \times L1 \times (1-k^2)}$$

where: $\omega = 2\pi f$, L1=inducatance of the primary side, k=coupling factor.

7. Circuit arrangement according to Claim 5, characterized in that the first inductance (L8) of the T-filter is dimensioned so that it is approximately greater than the short-circuit inductance $L1(1-k^2)$ reflected to the primary side by the impedance of the filter separating-capacitor (C7).

8. Circuit arrangement according to one of Claims 4 to 7, characterized in that the components (L8, C8, L1) of the filter, the capacitor (C7) functioning a electrical isolation between primary switches (T5, T6) and mains isolating transformer (M1), and the resonance capacitor (C9) of the mains isolating transformer on the secondary side are dimensioned in such a way that, with a pulse control factor of 50%, the input current of the T-filter passes the zero point at the switching instant.

9. Circuit arrangement according to one of Claims 4 to 7, characterized in that control is effected by varying the frequency of the control IC (IC1), the maximum power transfer being reached at the resonant frequency of the band-pass filter.

EP 0 232 915 B1